# EUROPEAN PATENT SPECIFICATION

(11) **EP 3 991 557 B1**
(45) Date of publication and mention of the grant of the patent: **16.08.2023**
(21) Application number: 21205415.9
(22) Date of filing: 28.10.2021
(51) Int. Cl.: A01M 7/00

(54) **ATOMIZER**
ZERSTÄUBER
L'ATOMISEUR

(30) Priority: 29.10.2020 IT 202000025783
(43) Date of publication of application: 04.05.2022
(73) Proprietor: Caffini S.p.A., 37050 Palu' (VR) (IT)
(72) Inventor: CAFFINI, Gerardo, 37050 Palù (VR) (IT); CAFFINI, Amedeo, 37057 San Giovanni Lupatoto (VR) (IT)
(74) Representative: Gallo, Luca

(56) References cited:
- DE-A1- 19 649 240
- IT-A1- BO20 120 597
- US-A1- 2012 085 836
- US-A1- 2018 352 798

## Description

### Field of application

The present invention regards an atomizer for spraying products for agriculture in particular for treatments on plantations such as vineyards, orchards and tree cultivations with low, medium, and high trunk.

The present atomizer is inserted in the scope of the industrial field of production of farming machinery and is advantageously intended to be employed in order to distribute atomized products on tree plantations. More in detail, the atomizer, object of the present invention, is particularly adapted for a use in plantations attained in rows, between which the atomizer passes, spraying the shafts of the plantations.

In particular, the present atomizer is intended to distribute liquid products on the plantations in particular for disinfestation of the cultivations.

### State of the art

As is known, atomizers for the distribution of products for agriculture on plantations are widespread on the market, which are farming machinery of towed or carried type, i.e. towed by a tractor. More in detail, conventionally, an atomizer towed comprises a support frame connected with a tiller (e.g. with eye) to the towing hook of the tractor. In the case instead of carried atomizers, the frame is connected to the tractor through the lift connections.

The frame of the atomizer is supported by two wheels susceptible of being driven in rotation, abutting against the ground, and supports a main tank intended to contain the products for agriculture. The latter are chemical products with phytosanitary principles and/or antiparasitic agents and/or fertilizers for the treatment of the cultivations.

Spraying means are therefore arranged on the frame, constituted by a plurality of nozzles mounted on each side of the atomizer which pulverize the liquid mixture and ventilation means, which transport the pulverized liquid mixture on the plantations.

As is known in the field of the treatment of the plantations, there is the particular need to attain an aimed distribution of the pulverized chemical product only on the vegetation to be treated, with consequent reduction of the drift, savings of active principle and consequently greater respect for the environment.

For such purpose, atomizers are known which orient the air flow with suitable deflectors, improving the penetration of the chemical product between the leaves. Several examples of such nebulizers of known type are described in the documents US 2012/085836 A1, DE 19649240 A1, US 2018/352798 A1 and IT BO20120597 A1. Nevertheless, these expedients do not yet allow reaching the desired efficiency for use of the chemical product to be distributed on the cultivations.

### Presentation of the invention

The main object of the present invention is therefore that of overcoming the drawbacks manifested by the solutions of known type, by providing an atomizer for spraying products for agriculture, which allows optimizing the distribution of the products as a function of the leaves of the cultivations in the plantations. Another object of the present invention is to provide an atomizer for spraying products for agriculture, which allows decreasing the consumptions of the towing tractor of the atomizer.

Another object of the present invention is to provide an atomizer for spraying products for agriculture which allows treating plantations in sensitive areas for example close to urban centers.

A further object of the present invention is to provide an atomizer for spraying products for agriculture which is simple to be used and entirely reliable in operation.

### Brief description of the drawings

The technical characteristics of the invention, according to the aforesaid objects, can be clearly seen in the contents of the below-reported claims and the advantages thereof will be more evident from the following detailed description, made with reference to the enclosed drawings, which represent a merely exemplifying and non-limiting embodiment of the invention in which:

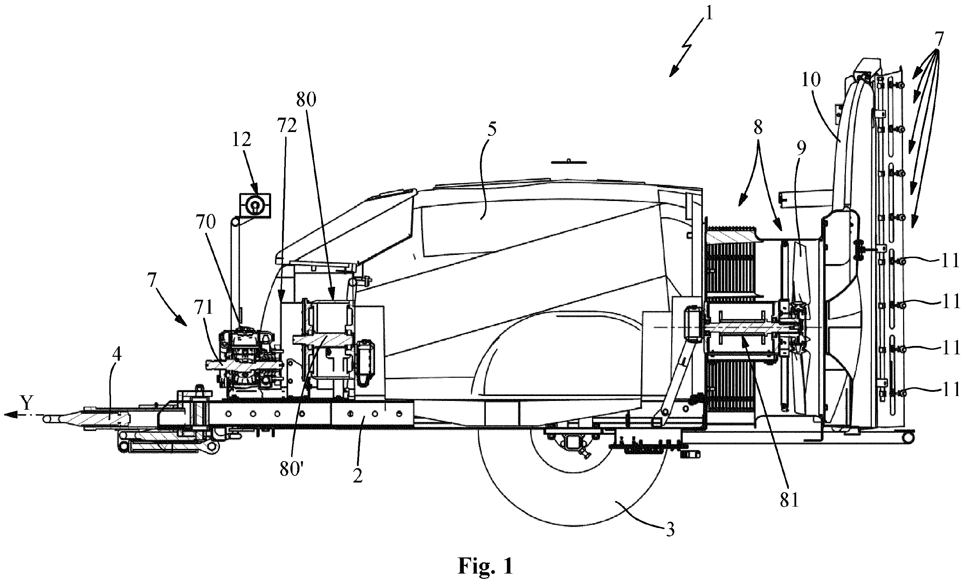

- figure 1 shows an overall side view of the atomizer for spraying products for agriculture for treatments on plantations, object of the present invention;
- figure 2 shows an overall front logic diagram for the operation of the atomizer of figure 1.

### Detailed description of a preferred embodiment

In accordance with the figures of the enclosed drawings, reference number 1 overall indicates the atomizer for treatments in plantations in particular vineyards, orchards and tree cultivations with low, medium, and high trunk, object of the present invention.

The atomizer 1 is a machine of towed or carried or self-propelled type, i.e. intended to be transported by a tractor through the rows of the plantations along a travel direction indicated with Y, i.e. to be directly mounted on a vehicle which advances between the rows in such direction indicated with Y.

The atomizer is in any case provided with a support frame 2 constituted by a metallic structure which, if of carried type, is abutted against the ground by means of two wheels 3 situated in the central lower part of the atomizer 1 itself, while in the other cases of carried or self-propelled atomizer it can be integrated in the same frame of the vehicle.

Hereinbelow, reference will be made to the embodiment illustrated in the enclosed figures which refers to an atomizer towed by a tractor T, without limiting the protective scope for this specific embodiment.

The support frame 2 is, in the described case of towed atomizer 1, mechanically connectable, in a per se conventional manner, to the rear part of a tractor, for example by means of a tiller 4 advantageously of steering type. The tiller 4 projects from the front part of the atomizer 1 and is for example provided with an eye for the connection to the towing hook of the tractor. The tiller 4 can also be of different type, and for example comprise a system for attaching to the lift of the tractor.

On the support frame 2, a containment tank 5 is mounted for containing at least one liquid product to be dispensed on the plantations, e.g. made of polyethylene with capacity from 200 to 5000 liters. The liquid product to be dispensed is a chemical product with phytosanitary principles and/or antiparasitic agents and/or fertilizers for the treatment of the cultivations.

The atomizer 1 comprises distribution means 7, for distributing the liquid product contained in the containment tank 5, and ventilation means 8 in order to transport, on the plantations, the liquid product nebulized by the distribution means 7.

More in detail, the ventilation means 8 are supported by the support frame 2, and comprise at least one fan 9 in order to generate an air flow and at least one conveyor 10, which receives the air flow from the fan 9 and orient it substantially transverse to the travel direction Y in order to treat the plantations.

In accordance with the non-limiting embodiment illustrated in the enclosed figures, the conveyors 10 are two in number and they are placed laterally with respect to the atomizer. Without departing from the protective scope of the present invention the atomizer 1 can also comprise only one conveyor 10, for example with curved shape with circular sector and of the type per se known to the man skilled in the art. Therefore all the characteristics defined hereinbelow for the two conveyors can be analogously referred to a single conveyor 10.

The distribution means 7 comprise a plurality of nozzles 11 hydraulically connected to the tank 5, and mechanically and operatively associated with the conveyor 10, in order to introduce the small drops of atomized liquid product into the air flow.

In the case of the example represented in the enclosed figures, the two lateral conveyors 10, for example advantageously made of fiberglass (but otherwise made of metal plate or polyethylene), are preferably shaped in the form of curved ducts which both receive a fraction of the air flow (advantageously 50% each) from the fan through a central connector and expel it through an outlet mouth elongated substantially vertically. In order to better direct the air flow towards the plant are provided with flaps associated with the outlet mouth which for example differentiate the flow rate at the output in order to facilitate a greater flow towards the top part of the plants.

The conveyor 10, i.e. in the case of the example the two lateral conveyors 10, are lifted, in a per se known manner, for this reason not described in detail, from the rear part of the atomizer 1, abutting against the central part of the support frame 2.

The nozzles 11 of the distribution means 7 are fixed to the two lateral conveyors 10 (i.e. to the single conveyor 10) at their outlet mouth in order to introduce, directly into the exiting air flow, the atomized liquid product to be distributed on the plantations. The nozzles can for example be mounted on substantially vertical guides in order to vary their position on the two lateral conveyors 10 (i.e. on a curved guide in the case of a single conveyor).

In accordance with the idea underlying the present invention, the distribution means 7 comprise at least one pump 70 provided with at least one shaft 71 arranged, for example provided at its front end with a male connection, not illustrated, in order to be mechanically connected, for example by means of a cardan shaft to the power take-off of a tractor (not illustrated).

In addition, the ventilation means 8 comprise an alternator 80, mechanically connected to the shaft 71 of the pump 70, in order to generate electrical energy, an electric motor 81, which is mechanically connected to the fan 9, and an electronic control group 82, which receives the electrical energy from the alternator 80 and power supplies the electric motor 81.

Therefore, in general, the electronic control group 82 transforms the alternating current that it receives from the alternator 80 and drives the power supply of the electric motor 81, controlling the speed, in particular for example in the case of an electric motor 81 of brushless, by varying the power supply frequency.

The electric motor 81 is, as stated, advantageously a brushless motor, with the rotor provided with permanent magnets and with the stator power supplied with controlled current reversal so as to generate the rotation of the magnetic field. For such purpose the electronic control group 82 advantageously comprises a rectifier 83, and an electronic power converter 84 or inverter (together also referred as inverter group). The latter is for example constituted by an inverter provided with a bench of power transistors driven by an electronic control unit 85 which controls the current switching, drives the current reversal and thus the rotation of the magnetic field.

Due to the inverter it is possible to easily adjust the power supply frequency and thus the rotation speed of the electric motor.

According to the idea underlying the present invention, the atomizer 1 also comprises at least detection sensor 12, susceptible of detecting the leaves of plantations. This is for example oriented substantially transverse to the travel direction Y of the atomizer for the purpose of reading the density of leaves of the plantations along which the atomizer 1 transits.

With the term detection sensor 12, it must be intended any one sensor capable of supplying a signal as a function of the density of leaves present in the vegetation of the plantation.

Advantageously, the detection sensor 12 is an ultrasound sensor, which identifies the quantity of leaves (density of leaves) through the analysis of the echo received, or of the reflected wave to the sent waves.

Preferably, at least two detection sensors 12 are provided, each of which associated with one side of the atomizer 1 and is oriented transversely outside this towards the leaves of the plantations in order to allow a reading of its density. The ultrasound detection sensor 12 preferably comprises multiple detection cells, each of which referable to an area to be inspected of the leaf vegetation of the plantation placed at a different height, so as to emit a distinct signal indicative of the density of leaves at that specific height from the ground. Each ultrasound detection sensor 12 is thus able to measure the size of the plant and its degree of porosity, with 0% porosity it being intended a transparent plant and with 100% porosity it being intended a plant that does not let a light ray penetrate.

Otherwise, the detection sensor 12 might not be an ultrasound sensor, but rather for example could be constituted by a camera.

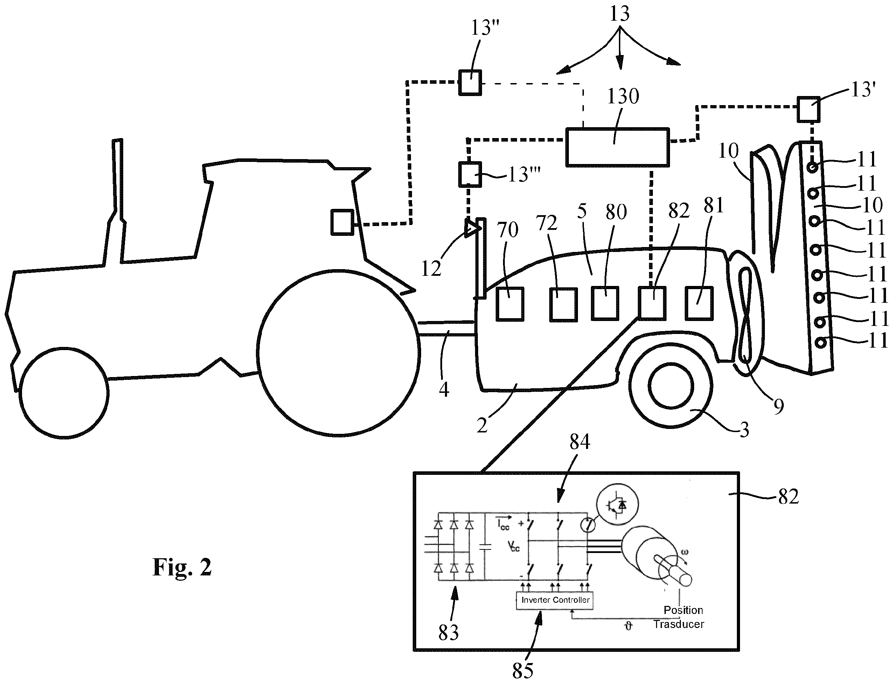

The atomizer 1 according to the invention also comprises a logic control unit 13 in signal communication (represented in figure 2 with a dashed line) with the detection sensor 12, and with the electronic control group 82 and configured for controlling the power supply through the electronic control group 82 to the electric motor 81 as a function of the signals received by the detection sensor 12. The logic control unit 13 is configured for processing the signals that it receives from the detection sensor 12 or from the detection sensors 12, whether these are ultrasound or another type, and determines, based on the signal values, how to rotate the fan, i.e. the flow rate of air flow in order to allow the small drops of atomized treatment liquid to impact the leaves with greater or smaller flow rate and hence reach all the leaves present in the plantations respectively with greater or smaller density.

In accordance with a preferred embodiment of the present invention illustrated in the enclosed figures, the pump 70 is a membrane pump provided with a through shaft 71, which is mechanically connected at a first end thereof to the shaft 80' of the rotor of the alternator 80, in particular by means of a gear transmission box 72, and at the other second end to the power take-off of the tractor (not illustrated).

In accordance with an embodiment of the present invention each nozzle 11 is controlled by at least one solenoid valve driven by the logic control unit 13. The latter is configured in order to drive the opening of the solenoid valve as a function of the signal received by the at least one detection sensor 12. For such purpose, advantageously the solenoid valve of each nozzle 11 is provided with a solenoid controlled to open and close with frequency cycles determined by the logic control unit 13 as a function of the signal received by the detection sensor 12. More in detail, the jets emitted by the nozzles 11 are therefore frequency jets, which makes possible managing the liquid variation distributed with frequency openings, through a solenoid for each single jet. The work frequency ranges for example from 0Hz (closed jet) to 10Hz (open jet) with intermediate steps of 1Hz, allowing a constant pressure distribution and consequently drops of constant sizes.

Due to the control of the speed of the fan with the detection sensor 12, the atomizer 1, object of the present invention, is capable of varying the air flow in real time as a function of the density of leaves and if necessary of also controlling the opening of the nozzles, in particular with a PWM system with opening frequency, also allows the adjustment of the quantity of distributed liquid. Such characteristics allow reducing the liquid treatment wastes of the plantations, saving costs and ensuring a higher respect of the environment.

Still more clearly, the atomizer 1 according to the present invention controls the speed of the fan in order to ensure the correct quantity of product that must arrive on the plant. For example an excessive quantity of air flow carrying the atomized product if the plant has only a few leaves (low porosity) would involve the spraying of the product that would be lost in drift, many meters distant from the plant.

Advantageously, moreover, the atomizer 1, object of the present invention, detecting the density of leaves with the detection sensor 12 is also able to establish, for example with tables, also the quantity of liquid product to be dispensed. For example, if a low density of leaves is detected, it is necessary to spray less product. The control of the opening of the nozzles carried out the logic control unit 13 as a function of the detection carried out by the sensor 12, as explained above with control of PWM type, allows varying the flow rate of product, maintaining the dispensing pressure constant and hence maintaining the size of the small drops attained with the atomizer nozzles 11 constant.

By maintaining the pressure of the delivery pump at a same pressure for different dispensing flow rates, the sizes of the small drops dispensed will have the same size.

The size of the small drops can be preset by the operator, for example as a function of the atmospheric conditions and of the type of liquid to be sprayed, by varying the delivery pressure of the pump 70. By setting the pressure of the dispensing of the pump 70, the operator can for example select 150 micron drops.

For example, in windy conditions, drops can be selected that have larger size.

Therefore the atomizer 1, object of the present invention, allows being able to vary not only the volume of air produced by the fan, but also the quantity of distributed liquid, always in real time and without variation of the drops size. The latter aspect is advantageously for the control of the product drift loss, since it is the operator to select the size of the drops as a function of the volume of plant protection product to be distributed and/or as a function of the weather conditions where one must operate.

Advantageously, the atomizer 1 also comprises a speed sensor and/or a wind direction sensor which are advantageously mounted on the support frame 2. The logic control unit 13 is therefore in signal communication also with such sensors (or with such sensor) and consequently determines the speed of the fan 9 and/or the PWM of the nozzles 11 in accordance with the programmed logic in the same unit 13. The person skilled in the art of the field will be able to determine the optimal flow rate of air of the fan 9 and flow rate of liquid product to the nozzles 11 as a function of the density of leaves as well as of the presence of wind (wind direction and speed). Advantageously, moreover, as a function of the characteristics of the wind and/or of the density of the leaves, the program can also account for the pressure and hence the size of the drops of liquid product to be distributed.

Different from the above-described particular embodiment, the control of the flow rate of liquid to be dispensed from the nozzles 11 can be controlled as a function of the density of the leaves detected not by the detection sensor 12 but as a function of regulation maps made for example starting from aerial images acquired from a drone and acquired by the logic control unit of the unit 13 of the atomizer 1, which, being georeferenced with GPS system and satellite navigation system, allows the distribution of the flow rate of the liquid product as a function of the density of leaves of the plantations.

The transmission of power to the fan is in accordance with the atomizers of known type normally constrained to the power take-off of the tractor and therefore it is not possible to vary the number of revolutions of the fan if not by varying the number of motor revolutions and the tractor advancement speed. The solution proposed by the present invention instead provides for an autonomous electrical transmission with an alternator that generates electrical energy, connected to the tractor by a cardan joint, and with the possibility of varying the number of revolutions of the electric motor of the fan as a function of the leaf mass to be treated.

Indeed, as explained above, the transmission of the power to the fan 9 occurs due to the coupling of the pump 70 (in particular membrane pump) to the cardan shaft of the tractor, such pump 70 in turn connected in an integral manner to a gear transmission box which carries an alternator 80 in rotation, which generates a power for example of 15-25 kw at a voltage for example of 400 Volt. The energy developed by the alternator 80 power supplies an electric motor 81 of similar power, through an electronic control group 82 (inverter group) which is capable of varying the speed of the electric motor 81. The management of the electronic control group 82 is entrusted to a logic control unit 13 advantageously provided with the dedicated electronic control unit 85 integrated in the same electronic control group 82.

Advantageously, moreover, the management of the jets emitted by the nozzles 11 associated with the two lateral conveyors 10 is entrusted to two dedicated electronic control units 13' (ECU) of the logic control unit 13.

The latter also comprises advantageously a computerized unit (for example of Can Bus or Iso Bus type) selected for the conventional management of the atomizer 1 provided with an electronic control unit thereof indicated with 13". The computerized unit allows setting the quantity of product to be distributed in a conventional manner and takes under consideration the speed of the tractor in order to maintain constant the liquid quantity introduced on the plantations.

In figure 2, such computerized unit with control unit has been simplified with reference to the control unit and a connection to the tractor.

Advantageously also the two ultrasound detection sensors 12 are provided with an electronic control unit indicated in the figure with 13"'.

Advantageously the logic control unit 13 of the atomizer 1 comprises a master electronic control unit 130, which controls all the abovementioned dedicated control units.

The variation of the number of revolutions of the fan and consequently of the air volume, due to electrical rather than hydraulic actuation control, allows a more precise regulation of the fan speed with a performance that reaches 95 to 98% with respect to a performance of a hydraulic system that at most reaches 80%, hence with an energy differential of about 20%. The electrical transmission is also more ecological given that, unlike electrical energy which is clean energy, the hydraulic transmission system requires replacement and disposal of oil and filters every 500 work hours, and possible losses due to breakage of a tube or loosening of a connector, which would lead to considerable ground pollution.

The advantageous preferred selection of using PWM jets at frequency was made in order to ensure the constancy of the drop size, which the operator can select as a function of the management of the product drift and also be able to operate in proximity to sensitive zones. The possibility, through the ultrasound sensors 12, of being able to vary in real time the volume of plant protection product distributed (it must be considered that the system also detects possible lack of vegetation), can lead to a savings of distributed product, with respect to a conventional atomizer, estimated at about 40%.

The tractor, being disconnected from the management of the revolutions of the fan, can work at optimal revolution speed in the curve of the consumptions (e.g. 1500 n/min), saving up to 20% of fuel and reducing the sound emissions.

The finding thus conceived therefore attains the pre-established objects.

Of course, the present finding can take on, in the practical achievement thereof, shapes and configurations that are even different from that described above without, for this reason, exiting from the present protective scope. In addition, all the details can be substituted by technically equivalent elements and the shapes, sizes and materials used can be of any type depending on the requirements according to the subject-matter and scope of the appended claims.

## Claims

1. Atomizer for spraying products for agriculture, in particular for treatments on plantations, which comprises:
- a support frame (2) susceptible of advancing on the ground in a travel direction (Y);
- a containment tank (5) for containing at least one liquid product to be dispensed, mounted on said support frame (2);
- ventilation means (8) supported by said support frame (2), comprising at least one fan (9) in order to generate an air flow and at least one conveyor (10), which receives the air flow from the fan (9) and orients it substantially transverse to the travel direction (Y) in order to treat the plantations;
- distribution means (7) for distributing the liquid product contained in said containment tank (5), comprising a plurality of nozzles (11) hydraulically connected to said containment tank (5), and mechanically associated with said conveyor (10);
**characterized in that:**
- said distribution means (7) comprise at least one pump (70) provided with at least one shaft (71) arranged for being mechanically connected to the power take-off of a tractor;
- said ventilation means (8) comprise:
- an alternator (80) mechanically connected to the shaft (71) of said pump (70), in order to generate electrical energy;
- an electric motor (81), which is mechanically connected to said fan (9);
- an electronic control group (82), which receives the electrical energy from said alternator (80) and power supplies said electric motor (81);
said atomizer (1) also comprising at least one detection sensor (12) susceptible of detecting the leaves of plantations, oriented substantially transverse to the travel direction (Y) of said atomizer (1);
- at least one logic control unit (13) in signal communication with said detection sensor (12), and with said electronic control group (82) and configured for controlling the power supply of said electric motor (81) through said electronic control group (82) as a function of the signals of said detection sensor (12).

2. Atomizer according to claim 1, **characterized in that** said pump (70) is a membrane pump that is provided with a through shaft (71) mechanically connectable at a first end thereof to the shaft of the rotor of said alternator (80).

3. Atomizer according to claim 2, **characterized in that** the through shaft (71) of said membrane pump (70) is mechanically connected to the rotor shaft (80') of said alternator (80) by means of a gear transmission box (72).

4. Atomizer according to claim 1, **characterized in that** it comprises at least two said detection sensors (12), each of which is associated with a side of said atomizer (1) and oriented transverse to the travel direction (Y) of said atomizer (1) in order to read the leaves of the plantations.

5. Atomizer according to any one of the preceding claims, **characterized in that** said at least one detection sensor (12) is an ultrasound sensor.

6. Atomizer according to claim 5, **characterized in that** said ultrasound sensor (12) comprises multiple detection cells, each of which referable to an area to be inspected and susceptible of emitting a distinct signal.

7. Atomizer according to any one of the preceding claims, **characterized in that** each said nozzle (11) is controlled by at least one solenoid valve driven by said logic control unit (13); the latter being configured for driving the opening of said solenoid valve as a function of the signal received by said at least one detection sensor (12).

8. Atomizer according to claim 7, **characterized in that** the solenoid valve of each said nozzle (11) is provided with a solenoid controlled to open and close with frequency cycles determined by said logic control unit (13) as a function of the signal received by said at least one detection sensor (12).

9. Atomizer according to any one of the preceding claims, **characterized in that** said atomizer is of the type towed with said support frame (2) that is abutted against the ground by means of two wheels (3) and said at least one conveyor (10) comprises two lateral conveyors (10) which are each oriented on a side of the atomizer (1).

10. Atomizer according to any one of the preceding claims, **characterized in that** it comprises at least one speed sensor for the wind and/or one detection sensor for the wind direction; said logic control unit (13) being in signal communication with said speed sensor for the wind and/or with said detection sensor for the wind direction.

## Patentansprüche

1. Zerstäuber zum Versprühen von Produkten für die Landwirtschaft, insbesondere für Behandlungen auf Pflanzungen, der Folgendes umfasst:
- einen Tragrahmen (2), der geeignet ist, sich in einer Fahrtrichtung (Y) auf dem Boden vorwärts zu bewegen;
- einen Sammeltank (5) mindestens eines zu verteilenden flüssigen Produktes, der auf dem genannten Tragrahmen (2) montiert ist;
- Belüftungselemente (8), die von dem genannten Tragrahmen (2) gelagert werden und mindestens einen Ventilator (9) zum Erzeugen eines Luftstroms und mindestens einen Förderer (10) umfassen, der den Luftstrom vom Ventilator (9) empfängt und ihn im Wesentlichen quer zur Fahrtrichtung (Y) zum Behandeln der Pflanzungen ausrichtet;
- Verteilungselemente (7) des in dem genannten Sammeltank (5) enthaltenen Produkts, die eine Vielzahl von hydraulisch an den genannten Sammeltank (5) angeschlossenen Düsen (11) umfassen, die mechanisch mit dem genannten Förderer (10) verbunden sind;
**dadurch gekennzeichnet, dass:**
- die genannten Verteilungselemente (7) mindestens eine Pumpe (70) umfassen, die mit mindestens einer Welle (71) ausgestattet ist, die darauf ausgelegt ist, mechanisch an die Zapfwelle einer Zugmaschine angeschlossen zu werden;
- wobei die genannten Belüftungselemente (8) Folgendes umfassen:
- einen Wechselstromgenerator (80), der mechanisch an die Welle (71) der genannten Pumpe (70) angeschlossen ist, um elektrische Energie zu erzeugen;
- einen Elektromotor (81), der mechanisch an den genannten Ventilator (9) angeschlossen ist;
- eine elektronische Steuerungsgruppe (82), die die elektrische Energie von dem genannten Wechselstromgenerator (80) erhält und den genannten Elektromotor (81) versorgt;
wobei der genannte Zerstäuber (1) außerdem mindestens einen Erkennungssensor (12) umfasst, der geeignet ist, das Blattwerk der Pflanzungen zu erkennen und im Wesentlichen quer zur Fahrtrichtung (Y) des genannten Zerstäubers (1) ausgerichtet ist;
- mindestens eine logische Steuerung (13) in Signalkommunikation mit dem genannten Erkennungssensor (12) und der genannten elektronischen Steuerungsgruppe (82), die darauf ausgelegt ist, die Versorgung des genannten Elektromotors (81) über die genannte elektronische Steuerungsgruppe (82) abhängig von den Signalen des genannten Erkennungssensors (12) zu steuern.

2. Zerstäuber nach Anspruch 1, **dadurch gekennzeichnet, dass** die genannte Pumpe (70) eine Membranpumpe ist und mit einer durchgehenden Welle (71) ausgestattet ist, die mechanisch an einem ersten Ende mit der Welle des Rotors des genannten Wechselstromgenerators (80) verbunden werden kann.

3. Zerstäuber nach Anspruch 2, **dadurch gekennzeichnet, dass** die durchgehende Welle (71) der genannten Membranpumpe (70) mittels eines Drehzahlmultiplikators (72) mechanisch mit der Rotorwelle (80') des genannten Wechselstromgenerators (80) verbunden ist.

4. Zerstäuber nach Anspruch 1, **dadurch gekennzeichnet, dass** er mindestens zwei genannte Erkennungssensoren (12) umfasst, von denen jeder mit einer Seite des genannten Zerstäubers (1) verbunden und quer zur Fahrtrichtung (Y) des genannten Zerstäubers (1) ausgerichtet ist, um das Blattwerk der Pflanzungen zu erkennen.

5. Zerstäuber nach einem beliebigen der vorangegangenen Ansprüche, **dadurch gekennzeichnet, dass** der genannte mindestens eine Erkennungssensor (12) ein Ultraschallsensor ist.

6. Zerstäuber nach Anspruch 5, **dadurch gekennzeichnet, dass** der genannten Ultraschallsensor (12) mehrere Detektorzellen umfasst, von denen jede sich auf einen zu inspizierenden Bereich bezieht und geeignet ist, ein eindeutiges Signal auszugeben.

7. Zerstäuber nach einem beliebigen der vorangegangenen Ansprüche, **dadurch gekennzeichnet, dass** jede genannte Düse (11) von mindestens einem von der genannten logischen Steuerung (13) gesteuerten Magnetventil gesteuert wird; wobei Letztere darauf ausgelegt ist, das Öffnen des genannten Magnetventils abhängig von dem von dem genannten mindestens einen Erkennungssensor (12) erhaltenen Signals zu steuern.

8. Zerstäuber nach Anspruch 7, **dadurch gekennzeichnet, dass** das Magnetventil jeder genannten Düse (11) mit einem Solenoid ausgestattet ist, das beim Öffnen und Schließen mit Häufigkeitszyklen gesteuert wird, die von dem genannten logischen Steuergerät (13) abhängig von dem von dem genannten mindestens einen Erkennungssensor (12) erhaltenen Signal bestimmt werden.

9. Zerstäuber nach einem beliebigen der vorangegangenen Ansprüche, **dadurch gekennzeichnet, dass** der genannte Zerstäuber gezogenen Typs ist, wobei der genannte Tragrahmen (2) mit Hilfe von zwei Rädern (3) auf dem Boden ruht und der genannte mindestens eine Förderer (10) zwei seitliche Förderer (10) umfasst, die jeweils zu einer Seite des Zerstäubers (1) ausgerichtet sind.

10. Zerstäuber nach einem beliebigen der vorangegangenen Ansprüche, **dadurch gekennzeichnet, dass** er mindestens einen Windgeschwindigkeitssensor und/oder einen Windrichtungserkennungssensor umfasst; wobei die genannte logische Steuerung (13) sich in Signalkommunikation mit dem genannten Windgeschwindigkeitssensor und/oder dem genannten Windrichtungserkennungssensor befindet.

## Revendications

1. Atomiseur pour la pulvérisation de produits pour l'agriculture, en particulier pour le traitement de plantations, comprenant:
- un châssis de support (2) susceptible d'avancer sur le sol dans un sens de marche (Y);
- un réservoir (5) contenant au moins un produit liquide à diffuser, monté sur ledit châssis de support (2);
- des moyens de ventilation (8) soutenus par ledit châssis de support (2), comprenant au moins un ventilateur (9) pour générer un débit d'air et au moins un convoyeur (10) recevant le débit d'air du ventilateur (9) et l'orientant essentiellement de manière transversale par rapport au sens de marche (Y) pour traiter les plantations;
- des moyens de diffusion (7) du produit liquide contenu dans ledit réservoir (5), comprenant plusieurs buses (11) raccordées hydrauliquement audit réservoir (5) et mécaniquement associées audit convoyeur (10);
**caractérisé en ce que:**
- lesdits moyens de diffusion (7) comprennent au moins une pompe (70) pourvue d'au moins un arbre (71) conçu pour être raccordé mécaniquement à la prise de force d'un tracteur;
- lesdits moyens de ventilation (8) comprennent:
- un alternateur (80) mécaniquement raccordé à l'arbre (71) de ladite pompe (70), pour générer de l'électricité;
- un moteur électrique (81), qui est mécaniquement raccordé audit ventilateur (9);
- une unité de commande électronique (82), qui reçoit l'électricité dudit alternateur (80) et alimente ledit moteur électrique (81);
ledit atomiseur (1) comprenant également au moins un capteur de détection (12) susceptible de détecter le feuillage des plantations, orienté essentiellement de manière transversale par rapport en sens de marche (Y) dudit atomiseur (1);
- au moins une unité de commande logique (13) communiquant des signaux audit capteur de détection (12) et à ladite unité de commande électronique (82), et configurée pour contrôler l'alimentation dudit moteur électrique (81) à travers ladite unité de commande électronique (82) en fonction des signaux dudit capteur de détection (12).

2. Atomiseur selon la revendication 1, **caractérisé en ce que** ladite pompe (70) est une pompe à membrane équipée d'un arbre traversant (71) pouvant être mécaniquement raccordé, au niveau de sa première extrémité, à l'arbre du rotor dudit alternateur (80).

3. Atomiseur selon la revendication 2, **caractérisé en ce que** l'arbre traversant (71) de ladite pompe à membrane (70) est raccordée mécaniquement à l'arbre du rotor (80') dudit alternateur (80) par un multiplicateur de tours (72).

4. Atomiseur selon la revendication 1, **caractérisé en ce qu'**il comprend au moins deux desdits capteurs de détection (12), chacun étant associé à un côté dudit atomiseur (1) et orienté de manière transversale par rapport au sens de marche (Y) dudit atomiseur (1) pour détecter le feuillage des plantations.

5. Atomiseur selon l'une quelconque des revendications précédentes, **caractérisé en ce que** ledit au moins un capteur de détection (12) est un capteur à ultrasons.

6. Atomiseur selon la revendication 5, **caractérisé en ce que** ledit capteur à ultrasons (12) comprend plusieurs cellules de détection, chacune se référant à une zone à inspecter et susceptible d'émettre un signal distinct.

7. Atomiseur selon l'une quelconque des revendications précédentes, **caractérisé en ce que** chacune desdites buses (11) est contrôlée par au moins une électrovanne commandée par ladite unité de commande logique (13) ; cette dernière étant configurée pour commander l'ouverture de ladite électrovanne en fonction du signal reçu par ledit au moins un capteur de détection (12).

8. Atomiseur selon la revendication 7, **caractérisé en ce que** l'électrovanne de chacune desdites buses (11) est pourvue d'un solénoïde dont l'ouverture et la fermeture sont commandées selon des cycles à fréquence déterminée par ladite unité de commande logique (13) en fonction du signal reçu dudit au moins un capteur de détection (12).

9. Atomiseur selon l'une quelconque des revendications précédentes, **caractérisé en ce que** ledit atomiseur est de type remorqué par ledit châssis de support (2) qui repose sur le sol au moyen de deux roues (3) et ledit au moins un convoyeur (10) comprend deux convoyeurs latéraux (10) chacun étant orienté sur un côté de l'atomiseur (1).

10. Atomiseur selon l'une quelconque des revendications précédentes, **caractérisé en ce qu'**il comprend au moins un capteur de vitesse du vent et/ou un capteur de détection du sens du vent ; ladite unité de commande logique (13) communiquant des signaux avec ledit capteur de vitesse du vent et/ou avec ledit capteur de détection du sens du vent.
